# EUROPÄISCHE PATENTSCHRIFT

(11) **EP 1 390 903 B1**
(45) Veröffentlichungstag und Bekanntmachung des Hinweises auf die Patenterteilung: **30.11.2005**
(21) Anmeldenummer: 02716851.7
(22) Anmeldetag: 05.04.2002
(51) Int. Cl.: G06K 7/08, G08B 13/24

(54) **SCANNER ZUM EINSATZ IM PRODUKTSCHUTZ**
SCANNER FOR APPLICATION IN PRODUCT PROTECTION
SCANNER UTILISE DANS LA PROTECTION PRODUIT

(30) Priorität: 14.04.2001 DE 10118683
(43) Veröffentlichungstag der Anmeldung: 25.02.2004
(73) Patentinhaber: Henkel Kommanditgesellschaft auf Aktien, 40589 Düsseldorf (DE)
(72) Erfinder: ROTH, Marcel, 40589 Düsseldorf (DE); LAMMERSCHOP, Olaf, 47809 Krefeld (DE); SAUER, Hans-Martin, 64297 Darmstadt (DE); BRINKMANN, Heiner, 40764 Langenfeld (DE); REIFFERSCHEIDT, Ralf, 47279 Duisburg (DE)
(86) Internationale Anmeldenummer: PCT/EP2002/003791
(87) Internationale Veröffentlichungsnummer: WO 2002/084371

(56) Entgegenhaltungen:
- WO-A-00/75895
- WO-A-99/35610
- US-A- 5 554 974

## Beschreibung

Die vorliegende Erfindung betrifft einen Scanner, der sich zur Messung von ferromagnetischer Resonanz, insbesondere in superparamagnetischen Materialien, eignet, sowie die Verwendung dieses Scanners zur Identifizierung eines mit einer Markersubstanz markierten Gegenstands oder Produkts.

Die Identifizierung oder Authentifizierung von Gegenständen spielt insbesondere bei Wert- oder Sicherheitserzeugnissen, wie z.B. Geldscheinen, Wertdokumenten, Scheckformularen, Personaldokumenten oder Kredit- und Scheckkarten, sowie bei Markenprodukten eine immer bedeutendere Rolle. Eine bekannte Möglichkeit ist es, die betreffenden Gegenstände durch aufwendige Verfahren zu kennzeichnen. Als Beispiel sei die Mikrogravur mittels Lasertechnik genannt. Alternativ werden Gegenstände mit Spezialfarben, phosphoreszierenden oder fluoreszierenden Pigmenten, oder anderen spezifischen Substanzen markiert. Die Identifizierung oder Authentifizierung der Gegenstände erfolgt dann durch Detektion dieser eingebrachten Sicherheitsmerkmale.

Nachteilig bei den bekannten Identifierungs- oder Authentifizierungsverfahren ist jedoch, daß sich die Sicherheitsmerkmale nach eingehender Analyse der Markierungen nacharbeiten lassen. Schon seit geraumer Zeit wird daher versucht, die Fälschungssicherheit solcher Identifizierungs- oder Authentifizierungsverfahren für den Produktschutz zu erhöhen.

WO 00/75895 offenbart einen Scanner zur Identifizierung eines mit einer ferromagnetisch-resonanzaktiven Markersubstanz markierten Produkts, umfassend einen Oszillator, einen Elektromagneten und einen Signal Detektor.

Aufgabe der vorliegenden Erfindung ist es daher, eine Vorrichtung zur Identifizierung und/oder Authentifizierung von Produkten oder Gegenständen zu schaffen, der zum einen ein einfaches Meßprinzip zugrundeliegt und die zum anderen eine fälschungssichere Identifizierung und/oder Authentifizierung durch Nachweis eines Sicherheitsmerkmals ermöglicht, das selbst bei Kenntnis des Funktionsprinzips der Identifizierung und/oder Authentifizierung und der Zusammensetzung sowie der Herstellungsweise der dem Sicherheitsmerkmal zugrunde liegenden Markierungssubstanz nicht nachgearbeitet werden kann.

Diese Aufgabe wird erfindungsgemäß gelöst durch einen Scanner zur Identifizierung eines mit einer ferromagnetisch-resonanzaktiven Markersubstanz markierten Produkts, umfassend
- einen HF-Oszillator (1) zur Erzeugung eines eine Probe durchdringenden statischen Hochfrequenzmagnetfelds H_{HF},
- einen Elektromagneten (3) zur Erzeugung eines auf die Probe wirkenden Gleichstrommagnetfelds H_{DC},
- einen Signal-Detektor (2) zur Bestimmung des HF-Anteils des magnetischen Flusses B_{HF}, der
dadurch gekennzeichnet ist, dass der Scanner einen Detektor zur Bestimmung der magnetischen Feldstärke H_{gesamt} aufweist, wobei das Gleichstrommagnetfeld H_{DC} bezogen auf den zeitlichen Verlauf der Messung nicht statisch ist.

Mit Hilfe des erfindungsgemäßen Scanners wird die ferromagnetische Resonanz der ferromagnetisch-resonanzaktiven Markersubstanz gemessen. Ferromagnetisch-resonanzaktive Substanzen sind solche Substanzen, die eine ferromagnetische Resonanz aufweisen. Dazu zählen ferromagnetische, ferrimagnetische, antiferromagnetische, paramagnetische und superparamagnetische Substanzen. Als Markersubstanzen besonders gut geeignet sind superparamagnetische Substanzen. Die markierten Produkte oder Gegenstände können mit einer oder mehreren Markersubstanzen ausgerüstet sein.

Dem erfindungsgemäßen Scanner liegt das Meßprinzip zugrunde, gleichzeitig den HF-Anteil des magnetischen Flusses und die magnetische Feldstärke bei einem statischen Hochfrequenzmagnetfeld und einem nicht statischen Gleichstrommagnetfeld zu bestimmen.

Eine Besonderheit des erfindungsgemäßen Scanners ist der nicht statische Verlauf des Gleichstrommagnetfeldes H_{DC} während der Messung der ferromagnetischen Resonanz.

Unter einem statischen Hochfrequenzmagnetfeld H_{HF} wird der magnetische Feldanteil des vom HF-Oszillator erzeugten elektromagnetischen Wechselfeldes mit einer Frequenz νₛ und einer gleichbleibenden Amplitude Aₛ verstanden.

Unter einem "nicht statischen Gleichstrommagnetfeld" wird ein Magnetfeld verstanden, bei dem sich der magnetische Fluß in Abhängigkeit von der Zeit während der Messung verändert.

Da das dem erfindungsgemäßen Scanner zugrunde liegende Meßprinzip relativ einfach ist, ist auch die Herstellung des Gerätes einfach und somit kostengünstig zu realisieren. So entfallen aufwendige Schaltungen wie sie bisher bei im Stand der Technik verwendeten Scannern nötig waren, die auf dem umgekehrten Meßprinzip beruhen (Bestimmung der zuvor beschriebenen Magnetfelder in einem statischen Gleichstrommagnetfeld und einem nicht statischen Hochfrequenzmagnetfeld). Dies ist für einen Einsatz bzw. die Verwendung des erfindungsgemäßen Scanners im Produktschutz von großem Vorteil.

Ein weiterer Vorteil des erfindungsgemäßen Scanners besteht darin, daß sich mit seiner Hilfe Markersubstanzen detektieren lassen, deren Detektion hochspezifisch ist. Aufgrund der speziellen Eigenschaften z.B. von superparamagnetischen Substanzen ist selbst dann eine hochgradig fälschungssichere Identifikation bzw. Authentifikation der markierten Produkte oder Gegenstände gewährleistet, wenn ein Fälscher sowohl das Wirkungsprinzip des Scanners als auch die Zusammensetzung und das Herstellungsverfahren der superparamagnetischen Markersubstanz kennt. So bewirken bereits geringste Veränderungen der Parameter bei der Herstellung superparamagnetischer Substanzen eine drastische Veränderung der ferromagnetischen Resonanzeigenschaften, da diese Eigenschaften maßgeblich durch physikalische Eigenschaften, wie beispielsweise Kristallitgröße, Kristallstruktur, Kristallinität, Kristallitgrößenverteilung, Partikelgrößenverteilung, Modifizierung der Phasengrenzfläche zwischen Kristallen und Matrix, die die Partikel enthält, bestimmt werden.

Nach einer bevorzugten Ausführungsform der Erfindung steht der magnetische Feldvektor des Hochfrequenzmagnetfelds H_{HF} in einem Winkel zwischen 45 und 135 ° zu dem magnetischen Feldvektor des Gleichstrommagnetfelds H_{DC}. Besonders bevorzugt ist ein Winkel zwischen 80 und 100 °.

Hierdurch wird erreicht, daß das dem Scanner zugrunde liegende Messprinzip der ferromagnetischen Resonanz optimal ausgenutzt wird, wodurch ein deutlich verbessertes Signal/Rausch-Verhältnis erzielt wird.

Gemäß einer weiteren besonders bevorzugten Ausführungsform des erfindungsgemäßen Scanners wird das Gleichstrommagnetfeld H_{DC} durch Änderung des die Spule durchfließenden Stroms in Abhängigkeit der Zeit variiert. Besonders bevorzugt ist es, wenn die Stärke des Gleichstrommagnetfeldes H_{DC} in Abhängigkeit von der Zeit nach Erreichen des Maximalwerts für H_{DC} nicht linear abnimmt, wobei insbesondere ein exponentieller Abfall-bevorzugt ist.

Ein solches nicht statisches Gleichstrommagnetfeld ist schaltungstechnisch sehr einfach realisierbar. Wie im nachfolgenden Schema 1 dargestellt, wird hierzu nur eine einfache Kupferspule benötigt, die über einen Thyristor mit einem Kondensator verbundenen ist. Der Kondensator wird über eine Stromquelle aufgeladen. Nach erfolgter Aufladung des Kondensators wird der Ladestrom unterbrochen. Danach kann durch Zündung des Thyristors der Kondensator über die Spule entladen werden, wodurch ein - bezogen auf den zeitlichen Verlauf der Kondensatorentladung - nicht linear abfallendes Gleichstrommagnetfeld entsteht. Auf diese Weise ist es erstmals möglich, einen Scanner bereitzustellen, mit dem in einer vergleichsweise kurzen Zeit (weniger als 50 ms) eine Identifizierung z.B. einer superparamagnetischen Substanz vorgenommen werden kann. Somit können auf einfache Art und Weise mehrere Messwerte zur genaueren Identifizierung der superparamagnetischen Substanzen erhalten werden.

Der Scanner kann darüber hinaus zusätzlich eine Meß- und Steuereinheit aufweisen, die eine für die Bestimmung der relativen Permeabilität µᵣ geeignete physikalische Größe mißt. Als solche Größe eignet sich insbesondere der HF-Anteil des magnetischen Flusses B_{HF}.

Die Bestimmung des HF-Anteils des magnetischen Flusses B_{HF} kann in einfacher Weise durch Verwendung einer Schottky-Diode erfolgen. Somit erfolgt eine proportionale Bestimmung dieses Messwerts durch einfachen Abgriff der an der Schottky-Diode anliegenden Spannung, die gemäß dem Induktionsgesetz der zeitlichen Änderungen des magnetischen Fluss durch eine Fläche entspricht.

Nach einer weiteren bevorzugten Ausführungsform mißt die Meß- und Steuereinheit des weiteren zusätzlich eine für die Bestimmung der im Probenraum vorhandenen magnetischen Feldstärke H_{gesamt} geeignete physikalische Größe. Als solche physikalische Größe eignet sich insbesondere der die Spule des Elektromagneten durchfließende Strom.

Die Bestimmung der magnetischen Feldstärke H_{gesamt} kann dabei auf eine sehr einfache Weise erfolgen: Zwischen dem Kondensator und der Spule ist ein in Reihe geschalteter Messwiderstand angeordnet. An diesem Messwiderstand kann eine Spannung abgegriffen werden, die proportional zu dem die Spule durchfließenden Strom ist und damit eine direkte Messgröße für die magnetischen Feldstärke H_{gesamt} darstellt.

Der Verlauf des durch die Spule fließenden Stroms in Abhängigkeit von der Zeit ist in Kurve 1 wiedergegeben.

Schaltungstechnisch durch den Ladevorgang bedingt steigt der Strom in der Spule auf ein Maximum an. Die Anstiegsgeschwindigkeit wird maßgeblich von der Induktivität der Spule bestimmt. Das Maximum ist erreicht, wenn der Spannungsabfall an den Ohmschen Widerständen identisch ist mit der Restpannung des Kondensators. Danach beginnt der Strom monoton abzunehmen und sich asymptotisch, d.h. nicht linear gegen den Wert null zu nähern. Erst nach Erreichen des Maximums beginnt der für den erfindungsgemäßen Scanner optimal nutzbare Bereich des nicht linearen Verlaufs des Gleichstrommagnetfelds H_{DC}.

Zweckmäßigerweise erfolgt die Bestimmung der zuvor beschriebenen analogen Messgrößen durch geeignete Analog/Digital-Wandler, um auf diese Weise durch entsprechende Mikroprozessoren auswertbare Messgrößen zu erhalten.

Nach einer weiteren Ausführungsform der vorliegenden Erfindung steuert die Meß- und Steuereinheit zusätzlich die nicht statische Änderung des Gleichstrommagnetfelds H_{DC}.

Von dieser Möglichkeit ist besonders dann Gebrauch zu machen, wenn Messungen in kurzer Zeit durchgeführt werden sollen.

Gemäß einer weiteren, besonders bevorzugten Ausführungsform des erfindungsgemäßen Scanners umfaßt die Meß- und Steuereinheit zusätzlich eine Auswerteeinheit, die die Änderung der relativen Permeabilität µᵣ in Abhängigkeit der magnetischen Feldstärke H_{gesamt} in Form einer Signatur auswertet.

Unter dem Begriff "Signatur" wird der Verlauf einer Korrelation von zwei Messwerten verstanden, die in digitaler, d.h. elektronisch auswertbarer Form vorliegen.

Bezogen auf den vorliegenden Fall bedeutet dies, daß für einen bestimmten Zeitbereich kontinuierlich aufeinanderfolgend die relative Permeabilität µᵣ und die magnetische Feldstärke H_{gesamt} gemessen werden. Der Anfang dieses Zeitbereichs wird zweckmäßigerweise durch Erreichen eines Schwellenwertes der magnetischen Feldstärke H_{gesamt} bestimmt. Ab diesem Zeitpunkt werden die beiden Messgrößen mit einer zuvor bestimmten Messrate bestimmt und aufgezeichnet.

Die Auswertung erfolgt dabei durch geeignete, dem Fachmann bekannte mathematische Verfahren wie zum Beispiel durch Kurvenverlaufsanalyse oder auch durch einfache Auswertung lokaler Maxima und Minima.

Die nachfolgende Signatur 1 zeigt eine Messung von APG 933 der Fa. Ferrofluidics (1:10 in PE verdünnt).

Entsprechend einer ebenfalls besonders bevorzugten Ausführungsform vergleicht die Auswerteeinheit die gemessene Signatur mit einer zuvor gemessenen Signatur einer Referenzverbindung auf Identität.

Durch den Vergleich der gemessenen Signatur mit einer zuvor gemessenen Signatur läßt sich die Fälschungssicherheit des Identifizierungs- bzw. Authentifizierungsverfahrens noch weiter erhöhen. Aufgrund der speziellen Eigenschaften von superparamagnetischen Substanzen läßt sich anhand von Referenzmessungen eine Markersubstanz (bzw. das von ihr gemessene Spektrum) genau einem bestimmten Spektrum, das zuvor gemessen wurde, zuordnen. Auf diese Weise ist es möglich, im Falle von besonders wertvollen Gegenständen, wie z.B. Kunstgegegenständen, eine spezifische Identifizierung bzw. Authentifizierung eines Produkts bzw. Gegenstands durchzuführen. Eine genaue Reproduktion der Form einer Signatur ist nämlich selbst bei Kenntnis der chemischen Zusammensetzung der superparamagnetischen Substanzen sowie der Herstellungsweise dieser Substanzen nicht möglich, da bereits geringste Abweichungen der Verfahrensparameter bei der Herstellung bzw. geringe Veränderungen in der Herstellungsweise erhebliche Veränderungen der Signatur bewirken. Dies liegt darin begründet, daß die Herstellungsweise der superparamagnetischen Substanzen einen erheblichen Einfluss auf deren ferromagnetische Resonanzeigenschaften hat, da diese Eigenschaften massgeblich durch physikalische Eigenschaften, wie beispielsweise Kristallitgrösse, Kristallstruktur, Kristallinität, Kristallitgrössenverteilung, Partikelgrössenverteilung, Modifizierung der Phasengrenzfläche zwischen Kristallen und Matrix, die die Partikel enthält, bestimmt werden.

Somit ist es durch Verwendung des vorliegenden Scanners erstmals möglich, superparamagnetische Substanzen aufgrund ihres "finger-prints" als fälschungssicheres Identifizierungsmedium kommerziell zu nutzen.

Weiterhin erwächst aus der Individualität der Spektren die Möglichkeit, zusätzliche Informationen über das zu schützende Produkt zu kodieren. So können beispielsweise unterschiedliche Chargen eines Produkts mit verschiedenen superparamagnetischen Markersubstanzen ausgerüstet werden und die unterschiedlichen Signaturen im Scanner abgespeichert werden. Bei der Identitätsprüfung solcher Produkte mit dem erfindungsgemäßen Scanner läßt sich dann nicht nur deren Authentizität bezüglich des Herstellers, sondern auch Herstellungsdatum, -ort usw. ermitteln.

Die superparamagnetische Substanz kann dabei insbesondere ausgewählt sein aus der Gruppe von Ferriten und metallischen Nanopartikeln sowie Mischoxiden der allgemeinen Formel MeFe₂O₄, wobei Me für ein zweiwertiges Metall aus der Gruppe Ni, Co, Cr, Mo und V steht.

Nach einer besonders bevorzugten Ausführungsform des erfindungsgemäßen Identifizierungs- oder Authentifizierungsverfahrens besteht die superparamagnetische Substanz aus einem Mischoxid der allgemeinen Formel Me'ₓMe₁₋ₓFe₂O₄ wobei sowohl Me als auch Me' zweiwertige Metalle sind. Me' steht hierbei für ein zweiwertiges Metall, insbesondere Eisen, Nickel, Kobalt, Chrom, Molybdän, Vanadium, Zink, Barium, Strontium und Magnesium, eine Auswahl für Me wurde bereits weiter oben erläutert. Bei der oben genannten Formel Me'ₓMe₁₋ₓFe₂O₄ ist der Index x eine Zahl zwischen 0 und 0,5, besonders bevorzugt zwischen 0,1 und 0,3. Hierbei wäre ebenfalls eine Formel Me"_{Y}Me'Fe₂-_{Y}O₄ denkbar, wobei Me" ein beliebiges dreiwertiges Metall und Y eine Zahl zwischen 0 und 0,5, besonders bevorzugt zwischen 0,1 und 0,3 ist.

Nach einer weiteren besonders bevorzugten Ausführungsform des erfindungsgemäßen Scanners ist dieser mobil verwendbar. Eine solche Ausgestaltung läßt sich bei dem erfindungsgemäßen Scanner realisieren, da dem Scanner ein einfaches Meßprinzip zugrunde liegt und sich dies über eine elektronische Schaltung auf kleinem Raum realisieren läßt. Von besonderem Vorteil ist es, daß ein solcher mobiler, d.h. tragbarer Scanner ortsunabhängig zur Identifizierung bzw. zur Decodierung der erwähnten "Finger-prints" eingesetzt werden kann. Ein portabler Scanner ist vorteilhafterweise mit einer netzunabhängigen Stromquelle ausgerüstet. Dies eröffnet völlig neue Anwendungen beispielsweise auf dem Gebiet des Produkt- oder Markenschutzes oder der Sicherheitstechnik.

Das folgende Ausführungsbeispiel dient der Erläuterung der Erfindung:

### Beschreibung des Scanners:

Das Schema 2 stellt eine Realisierungsmöglichkeit für einen einfachen, tragbaren Scanner zur Identifizierung von superparamagnetischen Stoffen dar. Er besteht aus einem Hochfrequenzoszillator (1) für den Frequenzbereich zwischen 1 GHz und 300 GHz, einem Signaldetektor zur Umsetzung von Mikrowellenstrahlung in ein niederfrequentes Meßsignal (2), einem miniaturisierten Elektromagneten (3) nebst Stromversorgungseinheit (4), mit der er für einen Zeitraum von etwa 20 ms ein Magnetfeld bis etwa 60 mT in einem Probenvolumen von 0,5 cm³ aufrechterhalten kann, zwei Analog-Digital Konvertern (A/D-Wandler) zur Digitalisierung der vom Signaldetektor (2) abgegebenen Meßspannung (A/D-Wandler A/D1) und eines zur momentanen magnetischen Feldstärke des Elektromagneten (3) proportionalen Meßwerts, der an einem mit der Spule in Reihe geschalteten Widerstand abgegriffen werden kann (A/D2).

Ferner weist das Gerät eine zentrale Mikrocontroler-Einheit sowie ein Tastenfeld (5) und ein LCD-Display (6) auf.

Die hochfrequenztechnischen Elemente dieses Scanners sind speziell für den Nachweis ferromagnetischer Resonanz (FMR) in der zu untersuchenden Probe bemessen, indem sie ein sehr konzentriertes, allein auf die zu untersuchende Probe gerichtetes Mikrowellenfeld geeigneter Frequenz erzeugen. Wegen der bei FMR üblichen, außerordentlich starken Beeinflußbarkeit des Hochfrequenzfeldes durch geringste Mengen an ferromagnetischem Material ist eine aufwendige HF-Verstärkung des Meßsignals im Detektor überflüssig.

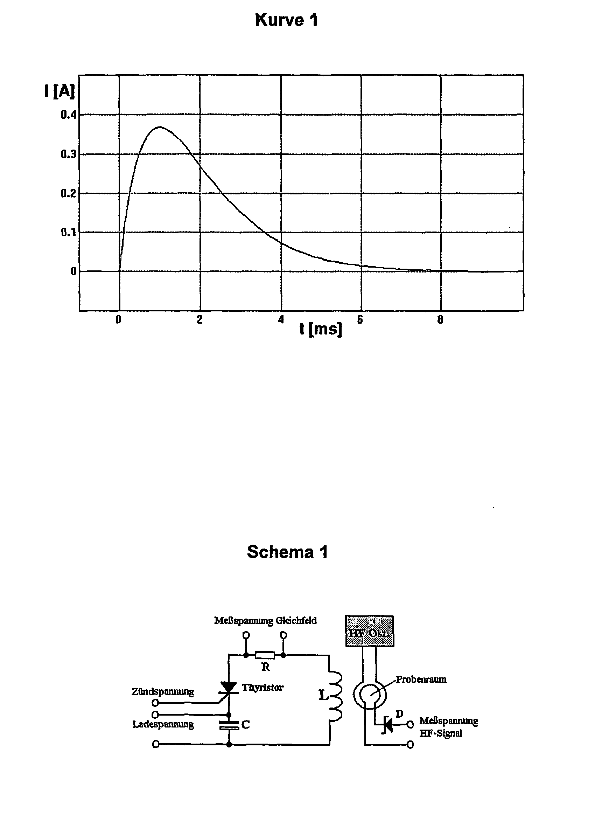

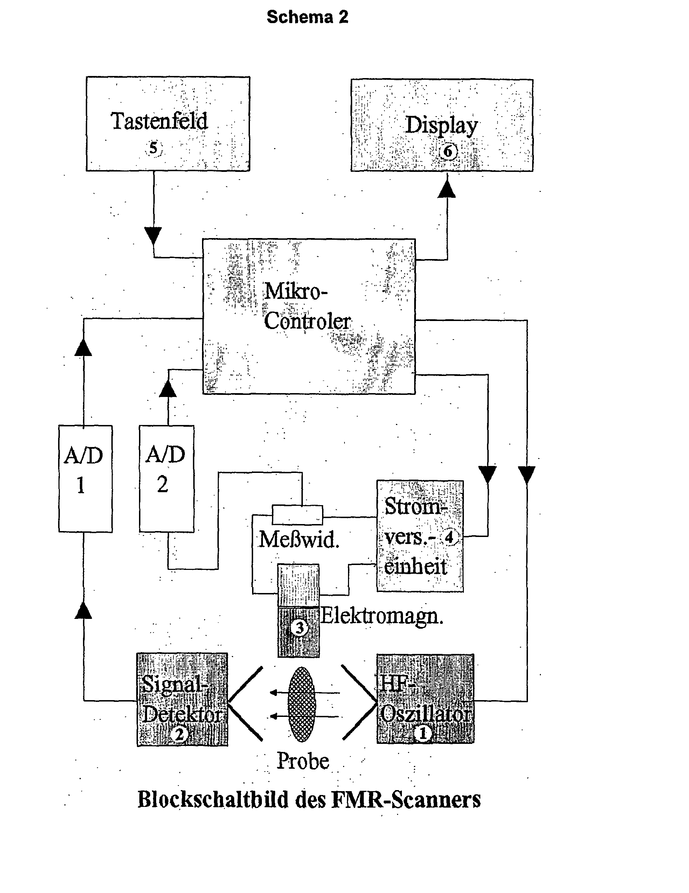

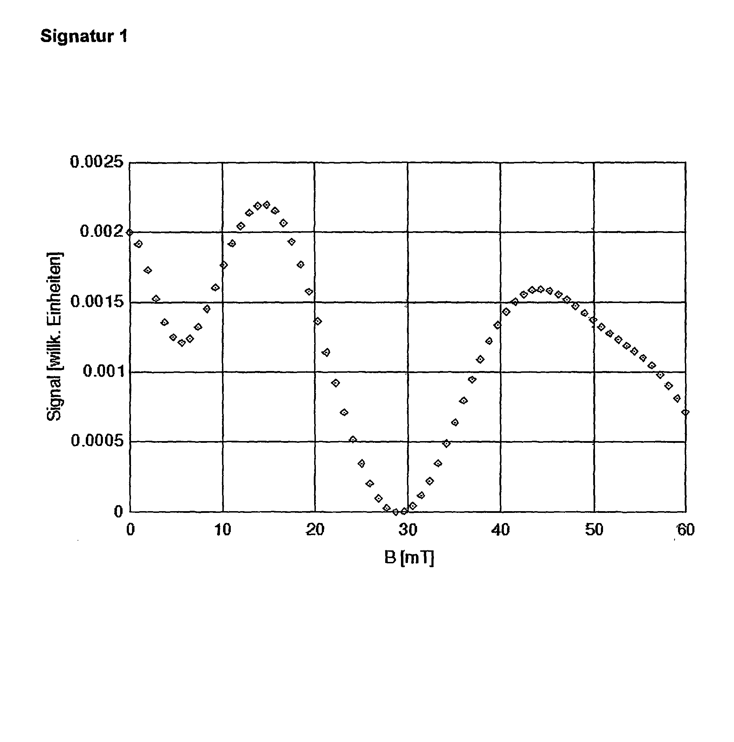

Die Konstruktion des Oszillators hängt vom Frequenzbereich ab, für den der Scanner vorgesehen ist. Im Bereich von 1 GHz bis ca. 20 GHz ist der Oszillator in Microstrip-Technik realisiert und folgt in seiner Funktionsweise einem Schaltungsvorschlag, der in dem Buch "Hochfrequenzanwendungen von Halbleiter-Bauelementen" von F. Kovacs, Franzis-Verlag, München 1978, S. 437, Abb. 23.13 b) beschrieben wird. Im Frequenzbereich oberhalb von 20 GHz werden Ein-Chip-Oszillatoren auf der Basis von Galliumarsenid-Halbleitern verwendet, wie sie u.a. von der Firma Infineon AG, Dresden, angeboten werden.

Der Signaldetektor besteht aus einer Schottky-Diode, welche die an einer Drahtschleife induzierte Hochfrequenzspannung in eine niederfrequente Meßspannung umwandelt. Die Drahtschleife ist in Microstrip-Technik realisiert und befindet sich im Einflußbereich des vom Oszillator erzeugten Hochfrequenzfeldes sowie des vom Elektromagneten erzeugten impulsförmigen Magnetfeldes. Mittels eines handelsüblichen Operationsverstärkers wird die Meßspannung auf einen für den A/D-Wandler geeigneten Pegel verstärkt.

Der Elektromagnet wird als Luftspule mit etwa 400 Windungen aus 0,2 mm starkem Kupferlackdraht ausgeführt. Der Spulenkörper besteht aus Kunststoff und hat eine Länge von 1 cm. Der Innenraum der Spule, in welche die zu prüfende Materialprobe eingeführt wird, hat einen Durchmesser von 8 mm; der Außendurchmesser liegt bei 2 cm.

Die Stromversorgungseinheit für den Magneten besteht aus einem Elektrolytkondensator mit einer Kapazität von 1.000 µF, der durch einen handelsüblichen, auf einem Mikrochip integrierten Spannungswandler von ca. 0,5 W Leistung auf eine Spannung von 40 V aufgeladen wird, sobald an dem zur Steuerung der Stromversorgungseinheit vorgesehenen Ausgang des Controlers das Signal "Kondensator laden" erscheint (siehe oben). Des weiteren ist der Kondensator über einen Thyristor und einen Meßwiderstand mit dem Elektromagneten (3) verbunden. Sobald der Controler das Signal "Feldimpuls erzeugen" ausschickt, zündet der Thyristor und entlädt den Kondensator über den Elektromagneten. Hierbei steigt der Strom durch den Magneten innerhalb von 2 bis 3 Millisekunden auf bis zu 0,5 A an und fällt innerhalb der darauffolgenden 20 Millisekunden wieder auf Null. Das im Elektromagneten erzeugte Magnetfeld erreicht im Maximum einen Wert von 60 mT und ist in jedem Zeitaugenblick zur Stromstärke proportional. Es kann deshalb über die Messung des Spannungsabfalls am erwähnten Serienwiderstand kontinuierlich gemessen werden. Zu diesem Zweck ist ein weiterer Operationsverstärker vorgesehen, der die am Serienwiderstand auftretende Spannung auf einen Pegel übersetzt, der vom zweiten A/D-Wandler digitalisiert werden kann. Dieser Operationsverstärker ist im selben Chip untergebracht wie der für den Signaldetektor (2) vorgesehene Operationsverstärker.

Das Display erlaubt es, das Prüfergebnis in verschiedenen Darstellungen und Detaillierungsgraden auszugeben:
1. Ja/Nein-Ergebnis, das die Übereinstimmung der gemessenen Signatur mit der Referenzsignatur dokumentiert;
2. alphanumerische Anzeige der Magnetfeldwerte und Amplituden in den Signalmaxima der aufgenommenen Meßkurve; und/oder
3. grafische Darstellung des Signatur.

Die Bedieneinheit besteht aus einem Tastenfeld, das für jeden der o. g. Anzeigemodi sowie für die Initialisierung des Prüfvorgangs eine eigene Funktionstaste bereitstellt.

Die Mikrocontroler-Einheit entspricht einem handelsüblichen Modell, das mit einem Mikroprozessor, einem Arbeitsspeicher von etwa 2 Kilobyte, einem nichtflüchtigen Speicher (EPROM) zur Aufnahme des Steuerprogramms und der Referenzdaten, sowie mit folgenden externen Datenkanälen ausgestattet ist:
- zwei Eingangskanälen mit je 10 bis 12 Bit Busbreite zum Auslesen der Datenwerte in den beiden A/D-Wandlern;
- einem Eingangskanal mit 4 bis 8 Bit Busbreite für das Tastenfeld;
- einem Ausgangskanal mit mindestens 16 Bit Busbreite für das LCD-Display
- Zwei Ausgangskanälen zur Steuerung der Stromversorgungseinheit (mit den Funktionen: "Aus", "Kondensator laden", "Feldimpuls erzeugen") und des Hochfrequenzsenders (mit den Funktionen: "Ein/Aus", "Frequenzwahl")

Ein weiterer Ausgangskanal (serielle Schnittstelle RS 232 o.ä.) zur Verbindung des Scanners mit einem externen Rechner zum Einlesen von Referenzdaten, zum Auslesen gespeicherter Prüfsignaturen und zum Einlesen des Controler-Steuerprogramms.

### Beschreibung eines Prüfvorgangs:

Um eine Materialprobe mit dem Scanner zu untersuchen, d.h. um beispielsweise die Signatur des z.B. aus Nanomagnetit gefertigten Zertifikats aufzunehmen und mit der Referenzsignatur zu vergleichen, wird diese in den Elektromagneten eingeführt, in welchem sich auch die Hochfrequenzantennen des Oszillators (1) und des Signaldetektors (2) befinden, die jeweils als Microstrip-Leiter ausgeführt sind. Die nun folgenden Schritte werden nach der Initalisierung des Prüfvorgangs, die durch Drücken der entsprechenden Taste auf dem Bedienfeld (5) eingeleitet wird, eigenständig vom Controler durchgeführt:

Das Signal "Kondensator laden" wird an die Stromversorgungseinheit (4) geschickt, welche innerhalb von wenigen Sekunden in der unten dargestellten Weise Energie zur Erzeugung eines magnetischen Feldimpulses von ca. 20 ms Dauer bereitstellt. Die Stromversorgungseinheit kann alternativ auch unmittelbar nach dem Einschalten des Scanners hierzu veranlaßt werden (ohne Mitwirkung des Controlers).

Der Oszillator (1) wird eingeschaltet, so daß das zu prüfende Zertifikat und die Aufnehmerspule des Signaldetektors davon durchsetzt werden. Gleichzeitig werden die A/D-Wandler in den Anfangszustand versetzt (Reset).

Das Signal "Feldimpuls erzeugen" wird an die Stromversorgungseinheit (4) geschickt, woraufhin der Entladevorgang des Kondensators einsetzt.

Im Abstand von 0,1 bis 0,5 Millisekunden (je nach der erforderlichen Prüfgenauigkeit und der Leistungsfähigkeit des Controlers) liest der Controler über die beiden A/D-Wandler die digitalisierten Signale des Detektors (2) und der magnetischen Feldstärke am Elektromagneten (3) aus und speichert diese Werte als Tabelle in seinem Arbeitsspeicher ab. Diese Vorgang ist nach etwa 25 Millisekunden beendet. Im Arbeitsspeicher des Controlers befindet sich hiernach die Prüfsignatur des Zertifikats in Form einer Tabelle, welche die am Signaldetektor anliegende Meßspannung der jeweiligen Stärke des anliegenden Magnetfeldes, das auf das Prüfzertifikat wirkt, gegenüberstellt. Die Meßspannung am Detektor bei gegebenem Wert des Magnetfeldes hängt davon ab, wieviel Hochfrequenzenergie die im Prüfzertifikat enthaltene magnetische Materialdispersion zu absorbieren vermag.

Der Oszillator (1) und die beiden A/D-Wandler werden ausgeschaltet.

Der Controler führt an der Tabelle eine Reihe von arithmetischen Operationen durch wie zum Beispiel die Normierung der Spannungswerte und den Vergleich der normierten Tabelle mit der im nichtflüchtigen Speicher vorliegenden Referenztabelle, die vom Aussteller des Zertifikats bezogen wurde. Hierzu kann ein zeilenweiser Vergleich der beiden Tabellen vorgenommen werden, wobei die Abweichungen zwischen den gemessenen Daten und den Referenzdaten dem Betrag nach aufsummiert werden. Das Zertifikat wird als echt anerkannt, wenn die resultierende Summe der Abweichungen einen bestimmten Wert nicht überschreitet. Des weiteren kann der Controler die Feldwerte bestimmen, bei welchen die am Signaldetektor abgenommenen Spannungen maximal oder minimal waren. Auch diese Werte können mit den Referenzdaten verglichen werden. Schließlich vermag der Scanner auch Materialdaten von speziellem wissenschaftlichem Interesse zu berechnen wie etwa das Mikrowellen-Absorptionsspektrum bei der gegebenen Oszillatorfrequenz als Funktion des anliegenden Magnetfeldes. Zu diesem Zweck kann der Controler eine Kramers/Kronig-Transformation der Meßdaten durchführen (J.D.Jackson, "Klassische Elektrodynamik", DeGruyter-Verlag, Berlin und New York 1983, 2. Auflage, S. 365)

Der Controler schickt das Prüfergebnis an das Display.

Nach erneutem vollständigem Aufladen des Kondensators in der Stromversorgungseinheit (4) kann der Prüfvorgang beliebig wiederholt werden.

## Patentansprüche

1. Scanner zur Identifizierung eines mit einer ferromagnetisch-resonanzaktiven Markersubstanz markierten Produkts, umfassend:
- einen HF-Oszillator (1) zur Erzeugung eines eine Probe durchdringenden statischen Hochfrequenzmagnetfelds H_{HF},
- einen Elektromagneten (3) zur Erzeugung eines auf die Probe wirkenden Gleichstrommagnetfelds H_{DC,}
- einen Signal-Detektor (2) zur Bestimmung des HF-Anteils des magnetischen Flusses B_{HF},
**dadurch gekennzeichnet, dass** der Scanner einen Detektor zur Bestimmung der magnetischen Feldstärke H_{gesamt} aufweist, wobei das Gleichstrommagnetfeld H_{DC} bezogen auf den zeitlichen Verlauf der Messung nicht statisch ist.

2. Scanner nach Anspruch 1, **dadurch gekennzeichnet, daß** der magnetische Feldvektor des Hochfrequenzmagnetfelds H_{HF} in einem Winkel zwischen 45 und 135 °, insbesondere zwischen 80 und 100 °, zu dem magnetischen Feldvektor des Gleichstrommagnetfelds H_{DC} steht.

3. Scanner nach Anspruch 1 oder 2, **dadurch gekennzeichnet, daß** das Gleichstrommagnetfeld H_{DC} durch Änderung des die Spule des Elektromagneten (3) durchfließenden Stroms in Abhängigkeit der Zeit variiert wird.

4. Scanner nach einem der vorhergehenden Ansprüche, **dadurch gekennzeichnet, daß** die Stärke des Gleichstrommagnetfeldes H_{DC} in Abhängigkeit von der Zeit nicht linear abnimmt.

5. Scanner nach Anspruch 4, **dadurch gekennzeichnet, daß** die Stärke des Gleichstrommagnetfeldes H_{DC} exponentiell abnimmt.

6. Scanner nach einem der vorhergehenden Ansprüche, **dadurch gekennzeichnet, daß** er zusätzlich eine Meß- und Steuereinheit aufweist, die eine für die Bestimmung der relativen Permeabilität µᵣ geeignete physikalische Größe mißt.

7. Scanner nach Anspruch 6, **dadurch gekennzeichnet, daß** die Meß- und Steuereinheit den HF-Anteil des magnetischen Flusses B_{HF} mißt.

8. Scanner nach Anspruch 6 oder 7, **dadurch gekennzeichnet, daß** die Meß- und Steuereinheit zusätzlich eine für die Bestimmung der im Probenraum vorhandenen magnetischen Feldstärke H_{gesamt} geeignete physikalische Größe mißt.

9. Scanner nach Anspruch 8, **dadurch gekennzeichnet, daß** die Meß- und Steuereinheit den die Spule des Elektromagneten (3) durchfließenden Strom mißt.

10. Scanner nach einem der Ansprüche 6 bis 9, **dadurch gekennzeichnet, daß** die Meß- und Steuereinheit zusätzlich die nicht statische Änderung des Gleichstrommagnetfelds H_{DC} steuert.

11. Scanner nach einem der Ansprüche 6 bis 10, **dadurch gekennzeichnet, daß** die Meß- und Steuereinheit eine Auswerteeinheit umfaßt, die die Änderung der relativen Permeabilität µᵣ in Abhängigkeit der magnetischen Feldstärke H_{gesamt} in Form einer Signatur auswertet.

12. Scanner nach Anspruch 11, **dadurch gekennzeichnet, daß** die Auswerteeinheit die gemessene Signatur mit einer zuvor gemessenen Signatur einer Referenzverbindung auf Identität vergleicht.

13. Scanner nach einem der vorhergehenden Ansprüche, **dadurch gekennzeichnet, daß** er mobil verwendbar ist.

14. Verwendung eines Scanners nach einem der Ansprüche 1 bis 13 zur Messung der magnetischen Eigenschaften einer Substanz.

15. Verwendung nach Anspruch 14 zur Messung der ferromagnetischen Resonanz einer ferromagnetisch-resonanzaktiven Substanz.

16. Verwendung nach Anspruch 15 zur Identifizierung eines mit einer ferromagnetisch-resonanzaktiven Substanz markierten Gegenstands oder Produkts.

17. Verwendung nach Anspruch 15 oder 16, **dadurch gekennzeichnet, daß** die ferromagnetisch-resonanzaktive Substanz eine ferromagnetische, ferrimagnetische, antiferromagnetische, paramagnetische und/oder superparamagnetische Substanz, insbesondere eine superparamagnetische Substanz, ist.

18. Verwendung nach Anspruch 17, **dadurch gekennzeichnet, daß** die superparamagnetische Substanz ausgewählt ist aus der Gruppe von Ferriten und metallischen Nanopartikeln sowie Mischoxiden der allgemeinen Formel MeFe₂O₄, wobei Me für ein zweiwertiges Metall aus der Gruppe Ni, Co, Cr, Mo und V steht.

19. Verwendung nach Anspruch 17, **dadurch gekennzeichnet, daß** die superparamagnetische Substanz ausgewählt ist aus Mischoxiden der allgemeinen Formel Me'ₓMe₁₋ₓFe₂O₄, wobei Me' ein zweiwertiges Metall, insbesondere Fe, Ni, Co, Cr, Mo, V, Zn, Ba, Sr, Mg und Me ein zweiwertiges Metall aus der Gruppe Fe, Ni, Co, Cr, Mo und V ist.

## Claims

1. A scanner for identifying a product marked with a ferromagnetic-resonance-active marker substance, comprising:
- an HF oscillator (1) for generating a static high-frequency magnetic field H_{HF} penetrating the sample,
- an electromagnet (f) for generating a d.c. magnetic field H_{DC} acting on the sample,
- a signal detector (2) for determining the HF component of the magnetic flux B_{HF},
**characterized in that** the scanner comprises a detector for determining the magnetic field strength Hₜₒₜₐₗ, the d.c. magnetic field H_{DC} being non-static based on the time profile of the measurement.

2. Scanner as claimed in claim 1, **characterized in that** the magnetic field vector of the high-frequency magnetic field H_{HF} is at an angle of 45 to 135° and more particularly between 80 and 100° to the magnetic field vector of the d.c. magnetic field H_{DC}.

3. A scanner as claimed in claim 1 or 2, **characterized in that** the d.c. magnetic field H_{DC} is varied by altering the current flowing through the coil of the electromagnet (3) as a function of time.

4. A scanner as claimed in any of the preceding claims, **characterized in that** the strength of the d.c. magnetic field H_{DC} decreases non-linearly as a function of time.

5. A scanner as claimed in claim 4, **characterized in that** the strength of the d.c. magnetic field H_{DC} decreases exponentially.

6. A scanner as claimed in any of the preceding claims, **characterized in that** it additionally comprises a measuring and control unit which measures a physical quantity suitable for determining the relative permeability µᵣ.

7. A scanner as claimed in claim 6, **characterized in that** the measuring and control unit measures the magnetic flux B_{HF}.

8. A scanner as claimed in claim 6 or 7, **characterized in that** the measuring and control unit additionally comprises a physical quantity suitable for determining the magnetic field strength Hₜₒₜₐₗ present in the sample space.

9. A scanner as claimed in claim 8, **characterized in that** the measuring and control unit measures the current flowing through the coil of the electromagnet (3).

10. A scanner as claimed in any of claims 6 to 9, **characterized in that** the measuring and control unit additionally controls the non-static change in the d.c. magnetic field H_{DC}.

11. A scanner as claimed in any of claims 6 to 10, **characterized in that** the measuring and control unit comprises an evaluation unit which evaluates the change in the relative permeability µᵣ as a function of the magnetic field strength Hₜₒₜₐₗ in the form of a signature.

12. A scanner as claimed in claim 11, **characterized in that** the evaluation unit compares the measured signature with a previously measured signature of a reference compound for identity.

13. A scanner as claimed in any of the preceding claims, **characterized in that** it can be used as a mobile device.

14. The use of the scanner claimed in any of claims 1 to 13 for measuring the magnetic properties of a substance.

15. The use claimed in claim 14 for measuring the ferromagnetic resonance of a ferromagnetic-resonance-active substance.

16. The use claimed in claim 15 for identifying an article or product marked with a ferromagnetic-resonance-active substance.

17. The use claimed in claim 15 or 16, **characterized in that** the ferromagnetic-resonance-active substance is a ferromagnetic, ferrimagnetic, antiferromagnetic, paramagnetic and/or superparamagnetic substance, more particularly a superparamagnetic substance.

18. The use claimed in claim 17, **characterized in that** the superparamagnetic substance is selected from the group of ferrites and metallic nanoparticles and mixed oxides with the general formula MeFe₂O₄, where Me is a divalent metal from the group consisting of Ni, Bo, Cr, Mo and V.

19. The use claimed in claim 17, **characterized in that** the superparamagnetic substance is selected from mixed oxides with the general formula Me'ₓMe₁₋ₓFe₂O₄, where Me' is a divalent metal, more particularly Fe, Ni, Co, Cr, Mo, V, Zn, Ba, Sr, Mg, and Me is a divalent metal from the group consisting of Fe, Ni, Co, Cr, Mo and V.

## Revendications

1. Scanner pour identifier un produit marqué par une substance marqueuse active en résonance ferromagnétique, comprenant :
- un oscillateur HF (1) pour produire un champ magnétique haute fréquence H_{HF} statique pénétrant dans un échantillon,
- un électroaimant (3) pour produire un champ magnétique continu H_{DC} agissant sur l'échantillon,
- un détecteur de signal (2) pour déterminer la proportion HF du flux magnétique B_{HF},
**caractérisé en ce que** le scanner présente un détecteur pour déterminer l'intensité du champ magnétique Hₜₒₜₐₗ, le champ magnétique continu H_{DC}, n'étant pas statique par rapport au déroulement temporel de la mesure.

2. Scanner selon la revendication 1, **caractérisé en ce que** le vecteur champ magnétique du champ magnétique haute fréquence H_{HF}, forme un angle compris entre 45 et 135°, en particulier entre 80 et 100° avec le vecteur champ magnétique du champ magnétique continu H_{DC}.

3. Scanner selon la revendication 1 ou 2, **caractérisé en ce que** l'on fait varier le champ magnétique continu H_{DC} en fonction du temps, en modifiant le courant circulant à travers la bobine de l'électroaimant (3).

4. Scanner selon l'une quelconque des revendications précédentes, **caractérisé en ce que** l'intensité du champ magnétique continu H_{DC} ne décroît pas de façon linéaire en fonction du temps.

5. Scanner selon la revendication 4, **caractérisé en ce que** l'intensité du champ magnétique continu H_{DC} décroît exponentiellement.

6. Scanner selon l'une quelconque des revendications précédentes, **caractérisé en ce qu'**il présente en outre une unité de mesure et de commande qui mesure une grandeur physique convenant à la détermination de la perméabilité relative µᵣ.

7. Scanner selon la revendication 6, **caractérisé en ce que** l'unité de mesure et de commande mesure la proportion HF du flux magnétique B_{HF}.

8. Scanner selon la revendication 6 ou 7, **caractérisé en ce que** l'unité de mesure et de commande mesure en outre une grandeur physique convenant à la détermination de l'intensité existante du champ magnétique Hₜₒₜₐₗ dans l'enceinte de l'échantillon.

9. Scanner selon la revendication 8, **caractérisé en ce que** l'unité de mesure et de commande mesure le courant circulant à travers la bobine de l'électroaimant (3).

10. Scanner selon l'une quelconque des revendications 6 à 9, **caractérisé en ce que** l'unité de mesure et de commande commande en outre la variation non statique du champ magnétique continu H_{DC}.

11. Scanner selon l'une quelconque des revendications 6 à 10, **caractérisé en ce que** l'unité de mesure et de commande comprend une unité d'évaluation qui évalue la variation de la perméabilité relative µᵣ en fonction de l'intensité du champ magnétique Hₜₒₜₐₗ sous forme d'une signature.

12. Scanner selon la revendication 11, **caractérisé en ce que** l'unité d'évaluation compare l'identité de la signature mesurée avec celle d'une signature mesurée auparavant d'un composé de référence.

13. Scanner selon l'une quelconque des revendications précédentes, **caractérisé en ce qu'**il est utilisable de façon mobile.

14. Utilisation d'un scanner selon l'une quelconque des revendications 1 à 13 pour mesurer les propriétés magnétiques d'une substance.

15. Utilisation selon la revendication 14 pour mesurer la résonance ferromagnétique d'une substance active en résonance ferromagnétique.

16. Utilisation selon la revendication 15 pour identifier un objet ou produit marqué par une substance active en résonance ferromagnétique.

17. Utilisation selon la revendication 15 ou 16, **caractérisée en ce que** la substance active en résonance ferromagnétique est une substance ferromagnétique, ferrimagnétique, antiferromagnétique, paramagnétique et/ou superparamagnétique, en particulier une substance superparamagnétique.

18. Utilisation selon la revendication 17, **caractérisée en ce que** la substance superparamagnétique est choisie dans le groupe des ferrites et des nanoparticules métalliques, ainsi que des oxydes mixtes de formule générale MeFe₂O₄, Me représentant un métal bivalent issu du groupe de Ni, Co, Cr, Mo et V.

19. Utilisation selon la revendication 17, **caractérisée en ce que** la substance superparamagnétique est choisie parmi les oxydes mixtes de formule générale Me'ₓMe₁₋ₓFe₂O₄, Me' étant un métal bivalent, en particulier Fe, Ni, Co, Cr, Mo, V, Zn, Ba, Sr, Mg, et Me étant un métal bivalent issu du groupe de Fe, Ni, Co, Cr, Mo, et V.
